(19) Europäisches Patentamt
European Patent Office
Office européen des brevets

(11) **EP 2 516 891 B1**

(12) **FASCICULE DE BREVET EUROPEEN**

(45) Date de publication et mention
de la délivrance du brevet:
**29.04.2015 Bulletin 2015/18**

(21) Numéro de dépôt: **10793271.7**

(22) Date de dépôt: **22.12.2010**

(51) Int Cl.:
***F16H 25/18*** *(2006.01)*      ***F16K 31/04*** *(2006.01)*
***F16K 31/528*** *(2006.01)*      ***F02M 25/07*** *(2006.01)*

(86) Numéro de dépôt international:
**PCT/EP2010/070596**

(87) Numéro de publication internationale:
**WO 2011/076902 (30.06.2011 Gazette 2011/26)**

(54) **DISPOSITIF DE TRANSFORMATION D'UN MOUVEMENT DE ROTATION EN UN MOUVEMENT DE TRANSLATION**

VORRICHTUNG ZUR UMWANDLUNG VON DREHBEWEGUNG IN TRANSLATIONALE BEWEGUNG

DEVICE FOR CONVERTING ROTATIONAL MOVEMENT INTO TRANSLATIONAL MOVEMENT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **22.12.2009 FR 0906236**

(43) Date de publication de la demande:
**31.10.2012 Bulletin 2012/44**

(73) Titulaire: **Valeo Systèmes de Contrôle Moteur
95800 Cergy (FR)**

(72) Inventeurs:
• **LESTIENNE, Stéphane
  F-95170 Deuil La Barre (FR)**
• **RIDOLFI, Gabriel
  27150 Hacqueville (FR)**

(74) Mandataire: **Cardon, Nicolas
Valeo Systèmes de Contrôle Moteur
Immeuble Le Delta
14, avenue des Béguines
95800 Cergy St Christophe (FR)**

(56) Documents cités:
DE-A1- 10 021 839      DE-U1- 29 603 331
FR-A1- 2 914 975       SU-A1- 1 199 474
US-A- 3 349 632        US-A1- 5 493 560
US-B1- 6 886 546

## Description

DOMAINE TECHNIQUE DE L'INVENTION

La présente invention a pour objet un dispositif de transformation d'un mouvement de rotation en un mouvement de translation. L'invention se rapporte d'une manière générale à tous les appareils de type actionneurs de moteur comportant un tel dispositif de transformation de mouvement.

Le domaine de l'invention est, d'une façon générale, celui des actionneurs de moteur dont la fonction est de convertir un mouvement de rotation, directement impulsé par le moteur, en un mouvement de translation, destiné à faire évoluer en translation une pièce mécanique.

Ce type d'actionneur est par exemple utilisé pour déplacer des vannes de type vannes EGR (Exhaust Gaz Recirculation en langue anglaise, pour Gaz d'Echappement Recirculé) dans des circuits dits circuits EGR. De tels circuits sont principalement utilisés dans les moteurs diesel pour diminuer la quantité d'espèces polluantes à l'échappement du véhicule automobile, en procédant à une réintroduction dans le moteur d'une partie des gaz d'échappement. Ainsi, dans ce contexte, le gaz inerte ou le mélange de gaz inerte, constitué par des gaz d'échappement brulés récupérés en sortie de la chambre de combustion, sont réintroduits dans le conduit d'admission puis dans la chambre de combustion du moteur. Le contrôle de la quantité de gaz d'échappement brulés réintroduits dans le circuit d'admission est réalisé au moyen d'une vanne EGR, qui obstrue plus ou moins le conduit par lequel circulent les gaz d'échappement brulés. Le dispositif de transformation de mouvement selon l'invention est tout à fait adapté aux vannes EGR, mais il peut bien évidemment être utilisé avec tout moteur dont au moins une des fonctions est une transformation d'un mouvement de rotation en un mouvement de translation, par exemple les actionneurs contrôlant des by-pass, des soupapes, des éléments de type volet carré, ou papillon destinés à évoluer en translation.

ARRIERE-PLAN TECHNOLOGIQUE DE L'INVENTION

Dans l'état de la technique, on connait essentiellement deux types de dispositif réalisant une transformation d'un mouvement de rotation en un mouvement de translation.

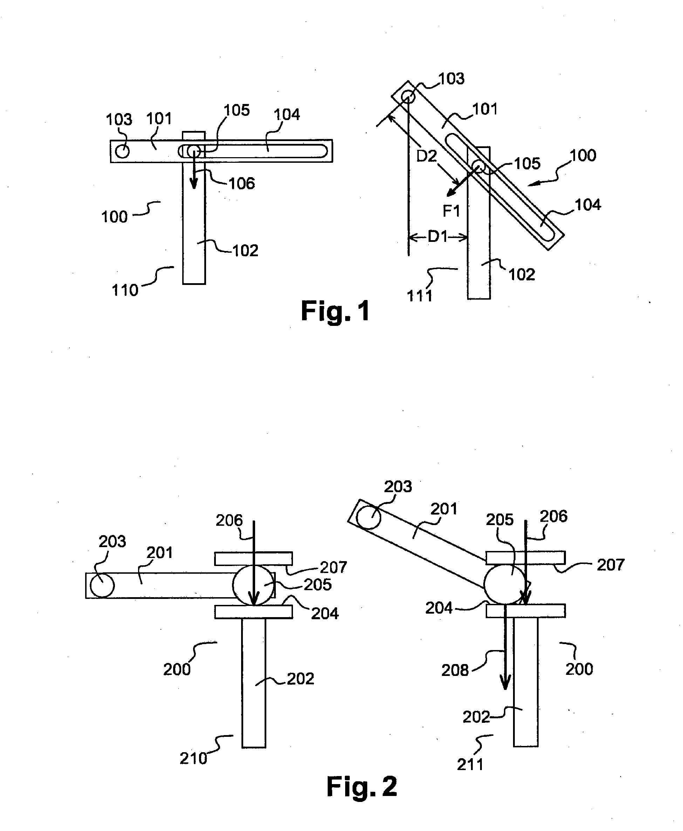

Le fonctionnement du premier type de dispositif est illustré à la figure 1. Sur cette figure, on a représenté schématiquement, dans une première position 110 et dans une deuxième position 111, un dispositif 100 de transformation de mouvement de rotation en mouvement de translation. Le dispositif 100 comporte essentiellement :

- une première tige 101 formant une biellette, destinée à évoluer en rotation autour d'un axe de rotation 103 fixe, ladite rotation étant impulsée par un moteur non représenté ;
- une deuxième tige 102, destinée à évoluer en translation selon une direction de translation 106 perpendiculaire au dit axe de rotation 103 ; le mouvement de translation de la deuxième tige 102 est réalisé par la présence, dans la première tige 101, d'un évidement rectiligne 104 formant un guide dans lequel peut évoluer un galet 105 solidaire de la deuxième tige 102. Le moteur, en provoquant la rotation de la première tige 101, entraine le déplacement du galet 105 dans le guide 104, provoquant ainsi le déplacement en translation de la deuxième tige 102.

Dans ce premier type de dispositif, une distance D1 entre la direction de translation 106 et l'axe de rotation 103 est constante. En conséquence, le bras de levier, correspondant à une distance D2 entre l'axe de rotation 103 et la position du galet 105, varie en fonction de la position de la première tige 101. On assiste ainsi à une évolution de la direction d'un effort F1 au cours de la rotation de la première tige 101 ; le changement de direction de l'effort F1 entraine la création d'un moment mécanique sur la deuxième tige 102 qui augmente les frottements sur le guide 104 de la première tige 101. Lorsque le galet 105 s'éloigne de l'axe de rotation 103, l'effort F1, au fur et à mesure de l'évolution de la rotation de la première tige 101, a une direction qui s'éloigne de plus en plus de la direction de l'axe de translation 106. On pousse ainsi de moins en moins selon l'axe de translation 106, l'effort impulsé par le moteur étant ainsi de moins en moins efficace pour la poussée destinée à faire évoluer en translation la deuxième tige 102. Ainsi, dans ce premier type de dispositif, on observe une usure rapide de différents éléments (notamment le guide 104 et le galet 105), et l'énergie fournie par le moteur n'est pas utilisée de manière optimale.

Le fonctionnement du deuxième type de dispositif, selon l'état de la technique, de transformation d'un mouvement de rotation en un mouvement de translation, est illustré à la figure 2. Sur cette figure, on a représenté schématiquement, dans une première position 210 et dans une deuxième position 211, un dispositif 200 de transformation de mouvement de rotation en mouvement de translation. Le dispositif 200 comporte essentiellement :

- une première tige 201 formant une biellette, destinée à évoluer en rotation autour d'un axe de rotation 203 fixe, ladite rotation étant impulsée par un moteur non représenté ;
- une deuxième tige 202, destinée à évoluer en translation selon une direction de translation 206 perpendiculaire au dit axe de rotation 203 ; le mouvement de translation de la deuxième tige 202 est réalisé par la présence, au niveau de la partie supérieure de la deuxième tige 202, d'un palier 204 au niveau duquel une extrémité 205 de la première tige 201 appuie pour faire descendre, lorsque la première tige 201 est, dans l'exemple considéré, entraînée dans un mouvement de rotation dans le sens horaire, la deuxième tige 202 selon un mouvement de translation. Le palier 204 est complété par une partie supérieure 207, sur laquelle l'extrémité 205 de la première tige 201 appuie pour faire remonter, lorsque la première tige 201 est dans un mouvement de rotation dans le sens antihoraire, dans l'exemple considéré, la deuxième tige 202 selon l'axe de translation 206.

Dans ce deuxième type de dispositif, l'effort appliqué sur le palier 204 ou sur la partie supérieure 207 n'est pas constant, et un couple est créé au niveau du palier 204 ou de la partie supérieure 207, l'effort exercé par l'extrémité 205 étant progressivement désaxé au cours de l'évolution du mouvement, comme illustré par une flèche 208 indiquant la direction de poussée de l'extrémité 205, direction de poussée 208 qui n'est plus confondue avec la partie centrale de la deuxième tige 202. Un tel couple a pour conséquence une usure notamment du palier 204.

Les différents types de dispositif ne permettent ainsi pas de disposer de solutions dans lesquelles un effort constant, fourni par un élément de contact d'une première tige sur une deuxième tige destinée à évoluer en translation, est orienté dans l'axe de ladite deuxième tige en ne créant pas de couple sur une surface de contact entre l'élément de contact et une zone d'appui de la deuxième tige.

Le document US 6886546 montre un dispositif selon le préambule de la revendication 1.

DESCRIPTION GENERALE DE L'INVENTION

Le procédé selon l'invention propose une solution au problème qui vient d'être exposé. Dans l'invention, on propose un dispositif présentant une loi de transformation de mouvement, pour passer d'un mouvement de rotation à un mouvement de translation, permettant d'avoir un effort constant, appliqué au moins au niveau d'un élément mobile en translation, sur toute une plage de positions couverte par un élément mobile en rotation entrainant ledit élément mobile en translation, ledit effort étant orienté de façon la plus proche possible de la direction de translation considérée, en étant centré sur l'axe de l'élément en translation. Ainsi, les efforts créant un moment mécanique sur l'élément en translation sont minimisés, le rendement du mécanisme de transformation de mouvement étant ainsi optimisé.

A cet effet, on propose dans l'invention d'utiliser une came présentant un chemin de came de forme particulière, ladite came étant solidaire de l'élément en rotation, l'élément en translation étant solidaire d'une pièce évoluant dans le chemin de came à forme particulière. Selon l'invention, la forme particulière du chemin de came considéré est, au niveau au moins d'un de ses rebords, de type développante de cercle.

L'invention concerne donc essentiellement un Dispositif de transformation d'un mouvement de rotation en un mouvement de translation, ledit dispositif comportant :

- un premier élément, entrainé en rotation, autour d'un centre de rotation fixe, par un moyen d'entrainement en rotation ;
- un deuxième élément entrainé en translation, selon un axe de translation, par une mise en rotation du premier élément ;
- une came, solidaire du premier élément, ladite came présentant un chemin de came dans lequel se déplace un galet solidaire du deuxième élément ;

caractérisé en ce que le chemin de came présente une surface de contact intérieure avec le galet, ledit galet étant en contact avec la surface de contact intérieure lorsque le premier élément est entrainé en rotation selon une première direction de rotation, ladite surface de contact intérieure définissant une courbe de type développante de cercle.

Le dispositif selon l'invention peut comporter, en plus des caractéristiques principales qui viennent d'être mentionnées dans le paragraphe précédent, une ou plusieurs caractéristiques supplémentaires parmi les suivantes:

- la courbe de type développant de cercle présente un rayon primitif égal à une distance observée entre le centre de rotation et l'axe de translation ;
- le chemin de came présente une surface de contact extérieure en contact avec le galet lorsque le premier élément est entrainé en rotation selon une deuxième direction de rotation ;
- la surface de contact extérieure définit une courbe particulière dont chaque point de contact avec le galet présente une direction normale à ladite courbe, ladite direction normale étant confondue avec l'axe de translation.

Les différentes caractéristiques supplémentaires du dispositif selon l'invention, dans la mesure où elles ne s'excluent pas mutuellement, sont combinées selon toutes les possibilités d'association pour aboutir à différents exemples de réalisation de l'invention.

La présente invention se rapporte également à un actionneur comportant un dispositif de transformation d'un mouvement de rotation en un mouvement de translation selon l'invention.

L'invention et ses différentes applications seront mieux comprises à la lecture de la description qui suit et à l'examen des figures qui l'accompagnent.

BREVE DESCRIPTION DES FIGURES

Celles-ci ne sont présentées qu'à titre indicatif et nullement limitatif de l'invention. Les figures montrent :

- à la figure 1, déjà décrite, un premier type de dispositif de l'état de la technique réalisant une transformation d'un mouvement de rotation en un mouvement de translation ;
- à la figure 2, également déjà décrite, un second type de dispositif de l'état de la technique réalisant une transformation d'un mouvement de rotation en un mouvement de translation ;
- à la figure 3, une représentation d'un actionneur incluant un exemple de dispositif selon l'invention ;
- à la figure 4, une représentation schématique d'un chemin de came intervenant dans un exemple de dispositif selon l'invention ;
- à la figure 5, différentes représentations schématiques illustrant la détermination de la forme du chemin de came intervenant dans l'exemple de réalisation du dispositif selon l'invention de la figure 4.

DESCRIPTION DES FORMES DE REALISATION PREFEREES DE L'INVENTION

Les éléments apparaissant sur différentes figures auront conservé, sauf précision contraire, les mêmes références.

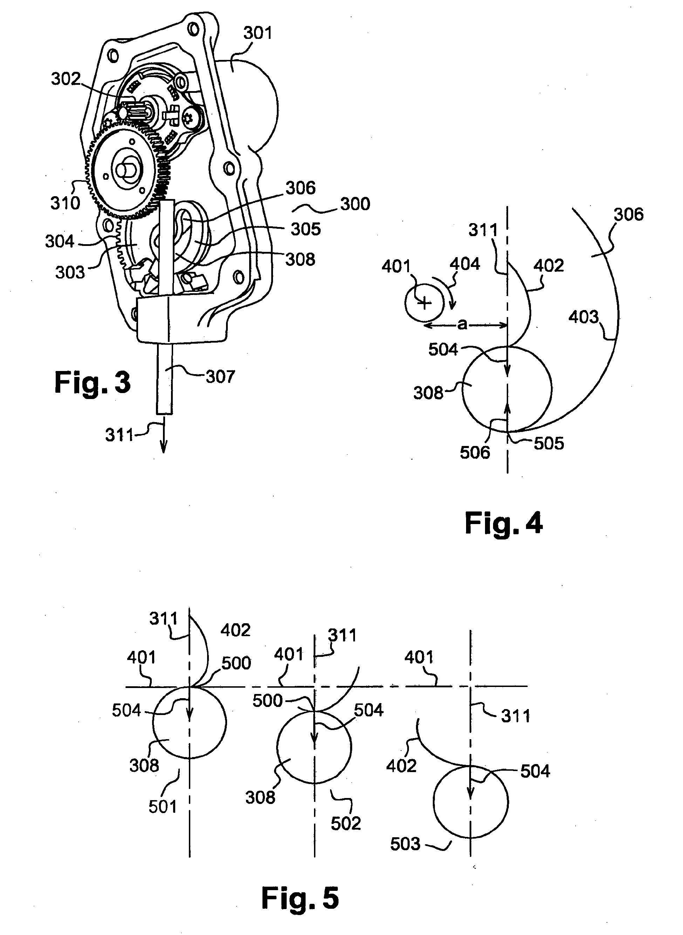

La figure 3 représente une vanne 300, dans l'exemple représenté de type actionneur de vanne EGR, comportant notamment :

- un élément moteur 301, apte à entraîner en rotation une première roue dentée 302 ;
- une roue dentée intermédiaire 310, entraînée en rotation par la première roue dentée 302 ;
- un premier élément 303 d'un exemple de dispositif selon l'invention, ledit premier élément étant ici constituée par une pièce mécanique présentant une partie dentée 304 formant un engrenage avec la roue dentée intermédiaire 310 de manière à être entrainée en rotation lorsque l'élément moteur 301 est actif ;
- une came 305, solidaire du premier élément 303 ; la came 305 est ainsi amenée en rotation lorsque l'élément moteur 301 est actif. La came 305 présente un chemin de came 306 ;
- un deuxième élément 307 d'un exemple de dispositif selon l'invention, ledit deuxième élément 307 étant ici constitué par une pièce mécanique en forme de tige présentant une pièce de type galet 308 apte à se déplacer dans le chemin de came 306 lorsque le premier élément 303 évolue selon un mouvement de rotation ; le déplacement du chemin de came 306 entraîne, par l'intermédiaire du galet 308, le déplacement de tige 307 selon un mouvement de translation selon un axe de translation 311. Avantageusement, afin de renforcer la stabilité de la tige 307, on ménage dans l'actionneur de vanne EGR 300 un orifice 309 dans le matériau constituant l'actionneur de vanne 300, ledit orifice laissant coulisser la tige 307 lors du mouvement de translation.

La figure 4 montre une représentation schématique d'une partie du chemin de came 306 intervenant dans le dispositif selon l'invention. La figure 4 est décrite conjointement à la figure 5, qui illustre la détermination de la forme du chemin de came 306 du dispositif selon l'invention.

Sur la figure 4, on a représenté le centre de rotation 401 du mouvement de rotation du premier élément 303, ainsi qu'une portion du chemin de came 306, entraîné en mouvement par la rotation dudit premier élément 303, et provoquant un déplacement relatif du galet 308 par rapport au chemin de came 306. Dans l'exemple considéré, le chemin de came 306 présente une surface intérieure 402 définissant une première courbe et une surface extérieure 403 définissant une deuxième courbe. On distingue la surface intérieure 402 de la surface extérieure 403 en désignant la surface intérieure 402 comme étant la surface, parmi les deux surfaces considérées, la plus proche du centre de rotation 401, la surface extérieure 403 étant en conséquence la surface, parmi les deux surfaces considérées, la plus éloignée du centre de rotation 401.

La surface intérieure 402 est constituée par une surface en contact avec le galet, au moins lorsque la rotation du premier élément 303 est observée dans un premier sens de rotation 404 ; dans l'exemple représenté, la surface intérieure 402 est en contact avec le galet lorsque le premier élément 303 est en rotation selon le sens horaire, entraînant le galet 308, et donc le deuxième élément 307, dans un mouvement de translation vers le bas par une poussée exercée par ladite surface intérieure 402 sur la galet 308.

**[0024]** - Selon l'invention, la surface intérieure 402 a la forme d'une courbe particulière, de type développante de cercle. Une telle courbe présente une équation cartésienne paramétrique, en considérant un repère orthonormé classique, de la forme suivante :

$$\begin{cases} x(t) = a \times \left( \cos(t) + t \times \sin(t) \right) \\ y(t) = a \times \left( \sin(t) - t \times \cos(t) \right) \end{cases}$$

où a est le rayon primitif de la développante de cercle considérée, où t est le paramètre de l'équation paramétrique.

En proposant une telle forme de courbe, on obtient, dans l'invention, une loi de transformation de mouvement qui permet non seulement d'avoir un effort constant sur toute la plage de déplacement du premier élément 303, ledit effort étant par ailleurs orienté selon la direction de l'axe de translation 208 du deuxième élément 307, ce qui permet de limiter au minimum les efforts créant un moment sur la tige et qui nuisent aux rendements du mécanisme. Ces caractéristiques physiques proviennent du fait qu'en proposant comme forme de surface intérieure 402 une courbe en développante de cercle, la normale à la courbe au niveau d'un point de contact 500, visible à la figure 5, est confondu avec l'axe de la tige 307, et donc avec l'axe de translation 311, pour la totalité de la plage de rotation du premier élément 303, comme visible pour une première position 501, une deuxième position 502 et une troisième position 503. Ainsi l'effort transmis à la tige 307 pat l'intermédiaire du galet 508 n'est plus une composante du couple mais la résultante et son orientation est celle de l'axe de la tige 307:

Avantageusement, dans l'invention, le chemin de came 306 présente la surface de contact extérieure 403, pour former une courbe englobante permettant le retour en position initiale de la tige 307 ; la surface de contact extérieure 403 est en contact avec le galet 308 lorsque le premier élément 303 est entrainé en rotation selon une direction de rotation opposée à la direction de rotation 404. Dans un exemple avantageux de réalisation, la surface de contact extérieure 403 définit une courbe particulière dont chaque point 505 de contact avec le galet 308 présente une direction normale 506 à la courbe 403, ladite direction normale 506 étant confondue avec l'axe de la tige 307, et donc avec l'axe de translation 311, pour la totalité de la plage de rotation du premier élément 303.

## Revendications

**1.** Dispositif de transformation d'un mouvement de rotation en un mouvement de translation, ledit dispositif comportant :

- un premier élément (303), entrainé en rotation, autour d'un centre de rotation fixe (401), par un moyen d'entrainement en rotation (301);
- un deuxième élément (307) entrainé en translation, selon un axe de translation (311), par une mise en rotation du premier élément (303) ;
- une came (305), solidaire du premier élément (303), ladite came (305) présentant un chemin de came (306) dans lequel se déplace un galet (308) solidaire du deuxième élément (307) ;

le chemin de came (306) présente une surface de contact intérieure (402) avec le galet (308), ledit galet (308) étant en contact (500) avec la surface de contact intérieure (402) lorsque le premier élément (303) est entrainé en rotation selon une première direction de rotation (404), **caractérisé en ce que** ladite surface de contact intérieure (402) définisse une courbe de type développante de cercle.

**2.** Dispositif selon la revendication précédente **caractérisé en ce que** la courbe de type développant de cercle présente un rayon primitif égal à une distance observée entre le centre de rotation (401) et l'axe de translation (311).

**3.** Dispositif selon l'une quelconque des revendications précédentes **caractérisé en ce que** le chemin de came (306) présente une surface de contact extérieure (403) en contact (505) avec le galet (308) lorsque le premier élément (303) est entrainé en rotation selon une deuxième direction de rotation.

**4.** Dispositif selon la revendication précédente **caractérisé en ce que** la surface de contact extérieure (403) définit une courbe particulière dont chaque point de contact (505) avec le galet (308) présente une direction normale (506) à ladite courbe particulière, ladite direction normale (506) étant confondue avec l'axe de translation (311) du deuxième élément (307).

**5.** Actionneur (300) pour des vannes de recirculation des gaz d'échappement, l'actionneur comportant un dispositif de transformation d'un mouvement de rotation en un mouvement de translation selon l'une quelconque des revendications précédentes.

## Patentansprüche

**1.** Vorrichtung zur Umwandlung einer Drehbewegung in eine Translationsbewegung, wobei die Vorrichtung Folgendes umfasst:

- ein durch ein Drehantriebsmittel (301) um ein festes Drehzentrum (401) herum drehangetriebenes erstes Element (303);
- ein durch Drehen des ersten Elements (303) entlang einer Translationsachse (311) translatorisch angetriebenes zweites Element (307);
- einen mit dem ersten Element (303) fest verbundenen Nocken (305), wobei der Nocken (305) eine Nockenbahn (306) aufweist, in der sich eine mit dem zweiten Element (307) fest verbundene Rolle (308) bewegt;

wobei die Nockenbahn (306) eine innere Fläche (402) zum Kontakt mit der Rolle (308) aufweist, wobei die Rolle (308) mit der inneren Kontaktfläche (402) in Kontakt steht (500), wenn das erste Element (303) in einer ersten Drehrichtung (404) drehangetrieben wird, **dadurch gekennzeichnet, dass** die innere Kontaktfläche (402) eine Kurve vom Typ Kreisevolvente definiert.

**2.** Vorrichtung nach dem vorhergehenden Anspruch, **dadurch gekennzeichnet, dass** die Kurve vom Typ Kreisevolvente einen Teilkreisradius aufweist, der einem zwischen der Drehmitte (401) und der Translationsachse (311) observierten Abstand entspricht.

**3.** Vorrichtung nach einem der vorhergehenden Ansprüche, **dadurch gekennzeichnet, dass** die Nockenbahn (306) eine äußere Kontaktfläche (403) aufweist, die mit der Rolle (308) in Kontakt steht (505), wenn das erste Element (303) in einer zweiten Drehrichtung drehangetrieben wird.

**4.** Vorrichtung nach dem vorhergehenden Anspruch, **dadurch gekennzeichnet, dass** die äußere Kontaktfläche (403) eine bestimmte Kurve definiert, von der jeder Kontaktpunkt (505) mit der Rolle (308) eine zur bestimmten Kurve senkrechte Richtung (506) aufweist, wobei die senkrechte Richtung (506) mit der Translationsachse (311) des zweiten Elements (307) zusammenfällt.

**5.** Aktuator (300) für Abgasrückführungsventile, wobei der Aktuator eine Vorrichtung zur Umwandlung einer Drehbewegung in eine Translationsbewegung nach einem der vorhergehenden Ansprüche umfasst.

**Claims**

**1.** Device for conversion of a rotational movement into a translational movement, said device including:

- a first element (303) driven in rotation about a fixed rotation centre (401) by rotation drive means (301);
- a second element (307) driven in translation along a translation axis (311) by rotation of the first element (303);
- a cam (305) fastened to the first element (303), said cam (305) having a cam path (306) in which moves a roller (308) fastened to the second element (307); the cam path (306) having an interior surface (402) of contact with the roller (308), said roller (308) being in contact (500) with the interior contact surface (402) when the first element (303) is driven in rotation in a first rotation direction (404), **characterized in that** said interior contact surface (402) defines a curve of circle involute type.

**2.** Device according to the preceding claim, **characterized in that** the curve of circle involute type has a primitive radius equal to a distance observed between the rotation centre (401) and the translation axis (311).

**3.** Device according to either one of the preceding claims, **characterized in that** the cam path (306) has an exterior contact surface (403) in contact (505) with the roller (308) when the first element (303) is driven in rotation in a second rotation direction.

**4.** Device according to the preceding claim, **character-** **ized in that** the exterior contact surface (403) defines a particular curve of which each point of contact (505) with the roller (308) has a direction (506) normal to said particular curve, said normal direction (506) coinciding with the translation axis (311) of the second element (307).

**5.** Actuator (300) for exhaust gas recirculation valves, the actuator including a device according to any one of the preceding claims for conversion of a rotational movement into a translational movement.

**Fig. 1**

**Fig. 2**

**Fig. 3**

**Fig. 4**

**Fig. 5**

**EP 2 516 891 B1**

## RÉFÉRENCES CITÉES DANS LA DESCRIPTION

**Documents brevets cités dans la description**

- US 6886546 B